# EUROPEAN PATENT SPECIFICATION

(11) **EP 2 401 911 B1**
(45) Date of publication and mention of the grant of the patent: **22.07.2015**
(21) Application number: 11172159.3
(22) Date of filing: 30.06.2011
(51) Int. Cl.: A01J 27/02, A23C 19/16, C08F 18/04, C08F 20/18, C09D 131/02, C09D 131/04

(54) **Spray coating compositions for cheese**
Sprühbare Beschichtungszusammensetzung für Käse
Composition d'enrobage par atomisation pour le fromage

(30) Priority: 01.07.2010 NL 2005010
(43) Date of publication of application: 04.01.2012
(73) Proprietor: CSK Food Enrichment B.V., 8938 AS Leeuwarden (NL)
(72) Inventor: Koopmans, Wieger Jan, 8911 ET Leeuwarden (NL); Hijkema, Tette, 8403 BH Jonkerslän (NL); Kevelam, Jan, 6718 HR Ede (NL); Meijer, Willem Cornelis, 6712 HA Ede (NL)
(74) Representative: Nederlandsch Octrooibureau

(56) References cited:
- EP-A1- 0 986 965
- EP-A1- 1 642 504
- WO-A1-86/03651
- US-A1- 2004 229 997
- N.N.: "Vinavil EVA 6615 - Technical data sheet", , 7 February 2011 (2011-02-07), XP002620878, Retrieved from the Internet: URL:http://www.vinavil.com/public/1/Schede Tecniche/en_vinavileva6615.pdf [retrieved on 2011-02-07]

## Description

### Field of the invention

The present invention relates to a method for coating cheese which comprises applying a cheese coating composition to said cheese using a spraying device. The invention also provides a cheese coating composition which is especially suitable for use in the method.

### Background of the invention

Semi-hard and hard cheeses are commonly treated with a cheese coating composition in order to control mould growth and in addition to protect the cheese from mechanical damage, for example during handling or transportation. Such cheese coating compositions are herein referred to as protective cheese coatings. Protective cheese coatings are to be distinguished from cheese conditioning aids based on optionally thickened fungicide suspensions, which merely provide mould control and essentially no mechanical protection. Protective cheese coatings require the presence of significant amounts of film-forming agents, especially of emulsion polymers.

Most cheese is industrially treated with a protective cheese coating using a machine equipped with a rotating brush. An example of such a coating machine is provided in CH 677999. The rotating brush may conveniently be replaced by pieces of cloth mounted on a rotating shaft.

In industrial cheese coating processes involving a rotating brush or the like, protective cheese coatings based on protective colloid-stabilized homo- or copolymer dispersions comprising vinylic esters and/or (meth)acrylic esters are typically used. Note that herein, the expression "protective colloid" is notionally unrelated to the term "protective cheese coating" defined above and refers to substances such as poly(vinyl alcohol), cellulose ethers and the like, which are suitable for producing stable polymer emulsions in emulsion polymerisation processes. The expression "protective colloid" is also known as "Schutzkolloid" in German.

A ready-to-use protective cheese coating composition for use with a rotating brush coating machine is commercially available as, for example, Ceska WL 200.03.45, commercially available from CSK Food Enrichment BV, The Netherlands. This product comprises a solids content of approx. 40 wt.% and has a Brookfield viscosity, when measured at room temperature, of 4500 mPa.s. This product is based on a poly(vinyl alcohol)-stabilised copolymer emulsion of vinyl acetate and dibutylmaleate, which emulsion may be suitably obtained as Mowilith® SDM 4230, ex Celanese Emulsions GmbH, Germany. Mowilith® SDM 4230 is a poly(vinyl alcohol)-stabilized copolymer emulsion of vinyl acetate and dibutylmaleate having a Brookfield viscosity, at room temperature, ranging between approx. 150.000 - 200.000 mPa.s and having a solids content of 45 wt.%.

Whilst rotating brush coating machines are very effective in use, particular in view of their high throughput capacity, for some applications, it may be desirable to apply protective cheese coatings by spraying. In particular, in contrast to machine application using a rotating brush-like device, spray application allows quick changes to be made in between treatments of different types of cheeses each requiring different coating finishes in terms of gloss, colour and the like.

WO 8603651 discloses a spray coating machine for applying a coating to a cheese. However, relatively little is known in the literature about protective spray coating formulations for cheese. Some hints are provided in WO/2006/056561, which discloses a peelable coating based on a water-borne dispersion and further comprising additives to lower the water vapour permeability, such as hydrophobic substances. Preferred water-borne emulsions are polymers or copolymers of polyethylene, poly(vinyl acetate - vinyl ester of carboxylic acid) or poly(acrylate) or mixture thereof. WO/2006/056561 further discloses that "Application [of these coatings] can be manual (e.g. with sponge or brush), semi-automatic or automatic (e.g. by brushing, dipping or spraying) depending on the number of foodstuffs to be treated. Specialised cheese coating and sausage coating machines are commercially available." However, WO/2006/056561 does not provide any directions for optimizing the coating compositions for spray applications. Furthermore, spray applications are not disclosed in the Example.

WO/2006/056561 further refers to "commercially available coating products such as Plasticoat ^{®} , Delvocoat ^{®} or Premicoat ^{®}" Plasticoat® is said to consist of a copolymer emulsion of vinyl acetate and "...is supplied in various viscosities and can be coated by hand or using a plastifying machine"; see http://www.dsm.com/en US/html/dfsd/dairy-products-preservation-pva-coatings.htm?DCSext.src=search. Furthermore it is mentioned that Plasticoat® is particularly suitable for coating of Northern European cheese, such as for example Gouda cheese. In this context the skilled person would immediately understand that Plasticoat® has been developed for a rotating brush coating machine (or indeed, synonymously, plastifying machine).

Premicoat® appears to relate to a range of natamycin-based coatings for dried and cured sausages, it is said to be a "patented formulation of Delvocid® and thickening agents", cf. http://www.dsm.com/en US/html/dfs/news items/premicoat0108.htm. This publication is silent on the mode of application and on the presence of a polymer emulsion.

Delvocoat® is sold by DSM Food Specialties as "tailormade products ... suitable for spraying and brushing applications". Delvocoat is said to "consist of high viscosity emulsion of PVA"; see http://www.dsm.com/en US/html/dfs/dairy-products-preservation-superdex.htm. No product specifications or further technical information appears to be publicly accessible through internet databases. If anything, this prior art would prompt the skilled person to look for "high viscosity emulsion of PVA".

EP 1.642.504 discloses an additive for a cheese coating composition which is selected from the group consisting of hydrophilic polymers such as caseins, starchs, modified starches, cellulose derivatives such as cellulose ethers, alginates, naturally occurring gums, such as gum arabic, fermentation produced polysaccharides such as xanthan gum. Said additive allows an improved adhesion of an outer layer of cheese wax of mineral origin.

EP 986.965 concerns antifungal compositions comprising imazalil sulfate, and the use of such compositions to treat food products such as cheeses and sausages and protect them against mould growth.

It was found that rotating brush coat compositions available, such as water-borne cheese coating compositions based on high viscosity protective colloid-stabilized polymer emulsions such as Mowilith SDM 4230, appear unsuited *per se.* Using such compositions it is difficult or even impossible to achieve sufficient flow through a suitable nozzle.

US 2004/229997 is no different. It discloses a food coating composition comprising an aqueous copolymer poly(vinyl ester) dispersion having a consistently high viscosity and improved film glossiness, striving for improved visual appearance of a coated food, such as a hard cheese. The application of the coating itself is not discussed, but the solids content and Brookfield viscosities mentioned in paragraph 81 for these high-viscosity emulsions are indicative that these - like the abovementioned Mowilith SDM 4230 - are unsuited for spraying.

In therefore appears that only a small amount of inconclusive information is available to the skilled person in order to allow him or her to formulate a *protective* cheese coating composition suitable for spraying.

### Summary of the invention

It is an object of the present invention to provide a suitable protective spray coating formulation for cheese, especially for semi-hard or hard cheese.

It was determined that a decisive factor for allowing a high application rate at high polymer solids content is the high-shear viscosity of the emulsion, especially the viscosity measured at a shear rate of 1.10³ s⁻¹ at 20 °C. The Brookfield viscosity appears of lesser importance. However, simultaneously, it is critical to maintain the amount of polymer solids in the spray coat composition at high levels, i.e. at a minimum total solid content of 38 %. At lower levels, the protective effect which could be obtained in a first coating treatment of a freshly brined cheese in terms of robustness is limited, particularly in a large scale industrial setting. In addition, extended drying times associated with lower polymer solids content should be avoided. Drying speed is of great importance in methods for coating of cheese comprising drying the coating and applying another coating layer to the cheese thus obtained. Accordingly the cheese receives several coating treatments. Such coating methods are widely employed for producing semi-hard or hard cheese, such as Gouda.

It was found that these requirements cannot be met by merely diluting commercially available rotating brush cheese coating compositions based on protective colloid-stabilized vinylic ester copolymers such as Mowilith SDM 4230, since acceptable flow rates were only obtained when diluting to a polymer solids content of below ca. 38 wt.% with respect to the total weight of the composition.

When further exploring flow rate as a function of shear viscosity and solid matter content, protective colloid-stabilized polymer emulsions were found which could be suitably employed in spray applications for coating cheese at even higher solids contents, *i.e.* at 38 wt.% or higher, whilst still allowing sufficient flow rates. These coating compositions having a minimum solids content of 38 wt.% can be suitably employed as protective coatings in an industrial environment.

In a first aspect, the present invention relates to a method for coating cheese comprising spraying a water-borne cheese coating composition to a cheese, wherein the water-borne cheese coating composition comprises a protective colloid-stabilized polymer in an amount of 38-60 wt.%, preferably 38 - 48 wt%, with respect to the weight of the composition, wherein said protective colloid-stabilised polymer is a polymer or a mixture of polymers obtainable by emulsion polymerisation in the presence of a protective colloid as claimed. The cheese coating composition preferably further comprises an additive selected from the group consisting of a colorant and a fungicide, or both.

In another aspect, the present invention relates to a water-borne cheese coating composition comprises a protective colloid-stabilized polymer in an amount of 38-60 wt.%, preferably 38 - 48 wt%, with respect to the weight of the composition, wherein said protective colloid-stabilised polymer is a polymer or a mixture of polymers obtainable by emulsion polymerisation in the presence of a protective colloid as claimed. Preferably, the cheese coating composition further comprises an additive selected from the group consisting of a colorant and a fungicide, or both.

At the aforementioned conditions, the viscosity is preferably between 50 and 300 mPa.s, more preferably between 100 and 250 mPa.s.

The one or more further monomer(s) are preferably selected as an ethylenically unsaturated monomer, preferably a maleic or a fumaric diester or ethylene, or a mixture thereof. Optionally, an emulsifier may further be present in addition to the protective colloid. Preferably, the optional emulsifier is present in an amount of 10 wt.% or less with respect to the polymer solids content. Low emulsifier contents are desirable in view of adhesion of further coating layers.

The protective colloid-stabilized polymer is suitably and preferably obtainable as a so-called medium to low viscosity polymer emulsion, for example as a medium viscosity poly(vinyl ester) homo- or copolymer emulsion. It is noted that Mowilith SDM4230 is a high-viscosity polymer emulsion. An example of a suitable and commercially available medium-viscosity polymer emulsion is Vinavil EVA 6615, a poly(vinyl acetate-co-ethylene) emulsion, commercially sold having a polymer solids content of ca. 60 wt.% and having a Brookfield viscosity at room temperature of 4000-8000 mPa. s.

On a separate notice, it was found that all-emulsifier stabilized polymer emulsions generally have the above-mentioned desired characteristics to be applied in protective cheese coatings for spraying. Using such emulsions, spray coating formulations for cheese could be generated having sufficiently high solid matter content (e.g. between 38 and 50 wt.%) in order to provide a sufficiently thick and protective coating layer and whilst allowing a sufficient application rate. However, the presence of large amounts of surfactants and in addition the absence of protective colloids may negatively affect the adherence of further coating layers to be applied at a later stage during ripening, and especially of a wax layer which is sometime applied as a finishing layer to a coated cheese in order to further protect it against mould growth and evaporative water loss.

### Detailed description of the invention

### Definitions

Herein, the expression "polymer solids content" refers to the content of the protective colloid-stabililised polymer.

The term "water-borne cheese coating composition" is known to the skilled person and implies that the cheese coating composition comprises a continuous aqueous phase and a polymer phase dispersed in the continuous phase. The water-borne cheese coating composition preferably comprises between *ca.* 30 and *ca.* 62 wt.% of water with respect to the total weight of the composition.

The term "protective colloid" is known to the skilled person (protect the dispersed phase from coalescence and separation) and preferably comprises a poly(vinyl alcohol), hydroxyethylcellulose, or poly(vinyl pyrrolidone), or a mixture thereof. The term "protective colloid" herein especially preferably relates to a poly(vinyl alcohol).

### The protective colloid stabilised polymers

The protective colloid-stabilized polymer is preferably a polymer or mixture of polymers obtainable by emulsion polymerisation, in the presence of a protective colloid, of a vinyl ester comprising 4-18 carbon atoms and one or more monomers selected from the group consisting of acrylic esters of saturated fatty acids having from 2-16 carbon atoms, ethylene, and maleic and fumaric mono- and diesters of saturated alcohols having from 4-8 carbon atoms. Said polymer is most preferably a polymer or mixture of polymers obtainable by emulsion polymerization, in the presence of a protective colloid, of a monomer mixture comprising (1) vinyl acetate and dibutylmaleate, (2) vinyl acetate and ethylene, (3) vinyl acetate and n-butylacrylate, or (4) vinyl acetate and a vinyl versatate, wherein the monomer mixture comprises said two different monomers in a total amount of at least 80 wt.%, more preferably of at least 90 wt.% with respect to the weight of the monomer mixture. The protective colloid-stabilized polymer may be a single polymer or a mixture of different polymers.

Preferably, the protective colloid-stabilised polymer is obtained or obtainable as a polymer emulsion which - in the absence of further additives - has a Brookfield viscosity, when measured at room temperature, of 9000 mPa.s or less at a solids content of ca. 60 wt.% with respect to the weight of the polymer emulsion. Accordingly, these polymer emulsions will have optimal rheological properties and is especially suited as a basis for the water-borne coating composition. The inventors have found that commercially available Vinavil EVA 6615 may be amended to render a colloid-stabilised polymer emulsion having the above-mentioned beneficial combination of solids content and shear viscosity.

The protective colloid-stabilized poly(vinyl ester) homo- or copolymer emulsion is preferably obtainable by polymerising a vinyl ester and optionally one or more further monomer(s) in the presence of 0.5-8 wt.%, more preferably 0.5-5 wt.% of a poly(vinyl alcohol), wherein the poly(vinyl alcohol) preferably has a degree of hydrolysis ranging between 70-95 mole%. Preferred poly(vinyl alcohol)s will have a Brookfield viscosity, when dissolved at 4 wt.% in an aqueous solution at 20 °C, of ca. 2 to ca. 50 mPa.s, more preferably of 3 to 40 mPa.s or 4-30 mPa.s for higher solids emulsions.

The protective colloid will be present in the coating composition as dissolved protective colloid and/or as grafted protective colloid. Any dissolved protective colloid comprised by the water-borne cheese coating composition preferably relates to the protective colloid fraction which resides in the transparent or translucent supernatant obtainable by centrifugation the said coating composition, wherein said centrifugation comprises separation of said coating composition to obtain a pellet and a transparent or translucent supernatant. The water-borne cheese coating composition preferably comprises a concentration of dissolved protective colloid which is 5 wt.% or less, but preferably at least 0.25 wt%.

Any grafted protective colloid comprised by an aqueous cheese coating composition preferably relates to the protective colloid fraction which resides in the pellet obtainable by centrifugation the said coating composition, wherein said centrifugation comprises separation of said coating composition to obtain a pellet and a transparent or translucent supernatant.

The polymer solids content is preferably determined as at least 80 wt.%, more preferably at least 90 wt.%, even more preferably at least 95 wt.%, most preferably at least 98 wt.%, of the combustible non-dissolved solid matter obtainable according to a method comprising centrifugation of the aqueous cheese coating composition to form a pellet and a transparent or translucent supernatant, isolating the pellet and drying it at ca. 105 °C for approx. 1 hour. Herein, "combustible solid matter" has its ordinary meaning and preferably relates to the weight fraction of the isolated pellet which, after drying at ca. 105 °C for approx. 1 hour, is not present as ashes. The relative amount and/or identity of the polymer obtainable by emulsion polymerisation, and optionally of any grafted protective colloid is suitably determined by applying conventional analytical techniques, such as NMR and/or mass spectrometry, to the pellet material which is preferably dried at ca. 105 °C for approx. 1 hour before analysis. When the polymer solids is determined according to this method, it essentially consists of the total amount of polymerized monomers and any grafted protective colloid; preferably, the amount of grafted protective colloid is less than 10 wt.%, more preferably less than 6 wt.% with respect to the polymer solids content.

The polymer solids content preferably provides at least 50 wt.%, more preferably at least 70 wt.%, most preferably at least 90 wt% of the total solids content of the water-borne cheese coating compositions. Accordingly, a dried coating layer having favourable properties can be formed, especially with regard to its protective properties. The total solids content of the water-borne cheese coating composition is preferably determined according to a method based on ISO 1625 (2nd edition, 1998-02-15). Herein, a small amount of the coating composition is weighed onto a flat surface provided by a first culture dish (diameter ± 60 mm), and a surface of a second culture dish is pressed against the surface of the first culture dish, comprising the coating composition. The weights of the two culture disks are known to the nearest mg. A thin film of the coating composition is applied on the two surfaces of the culture dishes by gently moving the touching surfaces in circular or ellipsoidal orbits. The dishes are then separated to expose their coated surfaces to the atmosphere. The dishes are then transferred into an oven which is heated to 105°C, and are left at that temperature for one hour. Afterwards, the dishes are transferred into a desiccator and allowed to cool to room temperature. The dishes are weighed with the attached films to the nearest 1 mg, and the solid matter content is calculated from the difference between the mass of the applied wet coating composition and the weight of the dry film.

The water-borne cheese coating composition preferably comprise ashes in an amount of less than 1 wt.%, more preferably less than 0.5 wt.% or 0.25 wt.% with respect to the total weight of the composition. Herein, ashes are preferably determined as the dry rest which is left after subjecting the coating compositions to thermal decomposition conditions, preferably in the presence of oxygen. Ashes can be suitably determined preferably by subjecting said material to a temperature of approx. 400 °C for approx. 4 hours in an atmosphere containing oxygen. The lower the amount of ashes, the better the quality of a dried coating film.

The term "Brookfield viscosity" of a sample preferably relates to the viscosity of the sample determined according to a method based on ISO 2555 (2nd edition, 1989-02-01; corrected and reprinted 1990-02-01). Herein, the viscosity of the sample is measured at room temperature (= 20-25 °C, preferably ca. 23 °C) using a Brookfield viscometer, preferably of type LVDV-E and preferably operated at speed 30 rpm, and preferably using spindle number 4. The viscosity meter is levelled and the spindle is attached to the apparatus. The spindle is then immersed into the sample up to the mark on the spindle. The measurement is started and the result is taken at steady-state or after one minute, whichever is first.

### The optional emulsifier

The optional emulsifier is preferably an C8-C24 alkyl sulphate or an ethoxylated alcohol or a mixture thereof. The optional emulsifier is preferably a non-ionic emulsifier and is further preferably selected as an ethoxylated alcohol. The ethoxylated alcohol is preferably a C8-C24 alcohol ethoxylate comprising between 4 and 20 ethylene oxide units. The presence of an emulsifier, especially of an anionic emulsifier such as an alkyl sulphate, may negatively affect stability of the fungicide, especially of natamycin. The water-borne coating composition, in particular a water-borne cheese coating composition comprising natamycin, therefore preferably comprises an emulsifier, in particular an anionic emulsifier, in an amount of 0.1 wt.% or less, with respect to the total weight of the composition. The optional emulsifier may have been present during the preparation of the protective-colloid copolymer emulsion, i.e. together with the protective colloid, or it may have been added thereafter.

### The water-borne coating composition

It is preferred that the water-borne coating composition has a polymer solids content of 38-50 wt.% or more preferably of 40-48 wt.% with respect to the total weight of the composition. At higher polymer solids content, risk of clogging of spray nozzles will increase during periods when the spraying device is not in operation. At lower polymer solids, drying of the coating composition is slowed down to industrially inacceptable rates.

### Additives to the water-borne cheese coating composition

The water-borne cheese coating composition according to the invention preferably further comprises a pseudoplastic thickening agent in an amount of preferably 0.1-1 wt.% with respect to the total weight of the composition. Accordingly, sagging of the applied coating layer can be reduced or even prevented. The pseudoplastic thickening agent preferably comprises a polysaccharide gum. The polysaccharide gum is preferably a thickening agent selected from the group consisting of xanthan gum, locust bean gum, a carrageenan, and guar gum, or a mixture thereof. Most preferably the pseudoplastic thickening agent is xanthan gum. Preferably, the water-borne coating composition comprising the pseudoplastic thickening agent has a Brookfield viscosity, when measured at room temperature, of 1000-3500 mPa.s. The water-borne coating composition comprising the pseudoplastic thickening agent suitably has a viscosity, when measured at 20 °C and at a shear rate of 1.10³ s⁻¹, of between 50 and 300 mPa.s, most preferably of between 100 and 250 mPa.s.

The optional colorant is preferably one or more compounds selected from the group consisting of a carotene, annatto, carbon black, titanium dioxide, tartrazine chinoline yellow, sunset yellow, cochenille red, indigotine, brilliant black, and litholrubine. Especially preferred colorants are annatto, carbon black, titanium dioxide and a carotene.

The optional fungicide is preferably one or more compounds selected from the group consisting of natamycin, acetic acid and propionic acid. In an embodiment, the fungicide is selected as acetic acid, propionic acid or mixtures thereof.

### Further advantages of the method

It has been advantageously found that by using the method according to the present invention, cross-contamination with unwanted micro-organisms between cheeses is substantially reduced or even prevented. The invention therefore also relates to a use of a spraying device in a coating process for cheeses for reducing or preventing cross contamination with unwanted micro-organisms between said cheeses.

### The cheese

The cheese to be coated is preferably of the semi-hard or hard type.

### Examples

Two water-borne cheese coating compositions having polymer solids contents ranging between 25 and 60 wt.% were prepared by diluting two different food-grade polymer emulsions with increasing amounts of water.

In the comparative example, Mowilith SDM 4230 (ex Celanese Emulsions GmbH, Germany) was used as the food-grade polymer emulsion. In the inventive example, Vinavil EVA 6615 (ex Vinavil, Italy) was used as the food-grade polymer emulsion.

The viscosity of the resulting water-borne cheese coating compositions was measured using a Paar MCR301 rheometer thermostated at 20 °C and equipped with a CP50 cone/plate geometry (separation d = 0.046 mm). The cheese coating compositions were initially subjected to a shear stress of 0.01 s⁻¹ which was increased in 18 intervals to a shear stress of 1.10⁴ s⁻¹. The Table summarises the measured viscosity at a shear stress of 1.103 s⁻¹.

| Comparative Example (Brush formulation; base Mowilith SDM 4230) | | embodiment according to invention (Spray formulation; base Vinavil EVA 6615) | |
|---|---|---|---|
| | η / Pa.s | | η / Pa.s |
| s.c. / wt.% | @ 10³ s⁻¹ | s.c. / wt.% | @ 10³ s⁻¹ |
| | | 59 | 2.59 |
| | | 54 | 0.7 |
| | | 48 | 0.25 |
| 45 | 1.52 | 44 | 0.085 |
| 42 | 0.86 | 41 | 0.065 |
| 40 | 0.55 | 39 | 0.038 |
| 38 | 0.36 | 37 | 0.025 |
| 34.5 | 0.22 | 34 | 0.02 |
| 32.5 | 0.14 | | |
| 30 | 0.09 | | |
| 27 | 0.06 | | |

| | | | |
|---|---|---|---|
| (s.c. = polymer solids content in wt.% relative to the total weight of the composition) | | | |

Clearly the coating composition according to the inventive example shows much lower viscosities at 1.10³ s⁻¹ even if the polymer solids content is increased by 10 percent points. Furthermore at equal solid matter content the inventive coating composition has much improved flow rate in spray applications as compared with the brush formulation. In addition, water-borne cheese coating compositions were prepared based on Vinavil EVA 6615 (total polymer solids content: 42-44 wt.%) and further comprising 0.2-0.3 wt.% of xanthan gum. The viscosity of these water-borne cheese coating compositions, when measured at 20 °C and at a shear rate of 1.10³ s⁻¹, was determined between 100 and 250 mPa.s. These cheese coating compositions further comprised annatto and natamycin.

## Claims

1. A method for coating cheese comprising spraying a water-borne cheese coating composition to a cheese, wherein the water-borne cheese coating composition comprises a protective colloid-stabilized polymer in an amount of 38-48 wt.% with respect to the weight of the composition, wherein said protective colloid-stabilised polymer is a polymer or a mixture of polymers obtainable by emulsion polymerisation in the presence of a protective colloid of (1) a vinylic ester and (2) optionally one or more further monomer(s); and wherein said coating composition has a viscosity, when measured at 20 °C and at a shear rate of 1.10³ s⁻¹, of 300 mPa.s or less, wherein the protective colloid-stabilized polymer is a protective colloid-stabilized poly(vinyl ester) homo- or copolymer emulsion obtainable by polymerising a vinyl ester and optionally one or more further monomer(s) in the presence of 0.5-8 wt.% of a poly(vinyl alcohol), wherein the poly(vinyl alcohol) has a degree of hydrolysis ranging between 70-95 mole% and a Brookfield viscosity, when dissolved at 4 wt.% in an aqueous solution at 20 °C, of 2 to 50 mPa.s.

2. The method according to claim 1, wherein the protective colloid-stabilised polymer is a polymer or mixture of polymers obtainable by emulsion polymerization, in the presence of a protective colloid, of a monomer mixture comprising (1) vinyl acetate and dibutylmaleate, (2) vinyl acetate and ethylene, (3) vinyl acetate and n-butylacrylate, or (4) vinyl acetate and a vinyl versatate, wherein the monomer mixture comprises said two different monomers in a total amount of at least 80 wt. with respect to the weight of the monomer mixture.

3. The method according to claim 1 or 2, which further comprises drying the spray-coated composition and spraying another layer of the water-borne cheese coating composition on the cheese.

4. The method according to any one of the preceding claims, wherein the cheese is a semi-hard or hard cheese.

5. A water-borne cheese coating composition comprises a protective colloid-stabilized polymer in an amount of 38-48 wt.% with respect to the weight of the composition, wherein said protective colloid-stabilised polymer is a polymer or mixture of polymers obtainable by emulsion polymerisation in the presence of a protective colloid of (1) a vinylic ester and (2) optionally one or more further monomer(s); and wherein said coating composition has a viscosity, when measured at 20 °C and at a shear rate of 1.10³ s⁻¹, of 300 mPa.s or less, wherein the protective colloid-stabilized polymer is a protective colloid-stabilized poly(vinyl ester) homo- or copolymer emulsion obtainable by polymerising a vinyl ester and optionally one or more further monomer(s) in the presence of 0.5-8 wt.% of a poly(vinyl alcohol), wherein the poly(vinyl alcohol) has a degree of hydrolysis ranging between 70-95 mole% and a Brookfield viscosity, when dissolved at 4 wt.% in an aqueous solution at 20 °C, of 2 to 50 mPa.s.

6. The water-borne cheese coating composition according to claim 5, wherein the protective colloid-stabilised polymer is a polymer or mixture of polymers obtainable by emulsion polymerization, in the presence of a protective colloid, of a monomer mixture comprising (1) vinyl acetate and dibutylmaleate, (2) vinyl acetate and ethylene, (3) vinyl acetate and n-butylacrylate, or (4) vinyl acetate and a vinyl versatate, wherein the monomer mixture comprises said two different monomers in a total amount of at least 80 wt.% with respect to the weight of the monomer mixture.

7. The water-borne cheese coating composition according to claim 5 or 6 which comprises the protective colloid-stabilized polymer in an amount of 40-48 wt.% with respect to the weight of the composition.

8. The water-borne cheese coating composition according to any one of claims 5-7, wherein the water-borne cheese coating composition has a viscosity, when measured at 20 °C and at a shear rate of 1.10³ s⁻¹, of 250 mPa.s or less.

9. The water-borne cheese coating composition according to any one of claims 5-8 which further comprises an additive selected from the group consisting of a colorant and a fungicide, or a mixture thereof.

10. The water-borne cheese coating composition according to any one of claims 5-9, wherein the protective colloid-stabilised polymer is a polymer or mixture of polymers obtainable by emulsion Polymerisation, in the presence of a protective colloid, of (a) vinyl acetate and ethylene or (b) vinyl acetate and dibutylmaleate.

11. The water-borne cheese coating composition according to any one of claims 5-10 which further comprises a pseudoplastic thickening agent in an amount of 0.1-1 wt.% with respect to the total weight of the water-borne cheese coating composition.

12. The water-borne cheese coating composition according to claim 11, wherein the pseudoplastic thickening agent comprises or preferably is xanthan gum.

13. The water-borne cheese coating composition according to any one of claims 9-12, wherein the fungicide is one or more compounds selected from the group consisting of natamycin, acetic acid and propionic acid.

14. The water-borne cheese coating composition according to claim 12, wherein the fungicide is natamycin.

15. The water-borne cheese coating composition according to any one of claims 9-14, wherein the colorant is one or more compounds selected from the group consisting of a carotene, annatto, carbon black, titanium dioxide, tartrazine chinoline yellow, sunset yellow, cochenille red, indigotine, brilliant black, and litholrubine.

16. The method according to any one of claims 1-4, wherein the water-borne coating composition is defined in any one of claims 5-15.

## Patentansprüche

1. Verfahren zur Beschichtung von Käse, bei dem man eine wasserbasierte Käsebeschichtungszusammensetzung auf einen Käse sprüht, wobei die wasserbasierte Käsebeschichtungszusammensetzung ein mittels Schutz-Kolloid stabilisiertes Polymer in einer Menge von 38-48 Gew.% bezogen auf das Gewicht der Zusammensetzung umfasst, wobei das mittels Schutz-Kolloid stabilisierte Polymer ein Polymer oder eine Mischung aus Polymeren ist, das/die mittels Emulsionspolymerisation in Gegenwart eines Schutz-Kolloids aus (1) einem Vinylester und (2) wahlweise einem oder mehreren weiteren Monomer(en) erhältlich ist/sind, und wobei die Beschichtungszusammensetzung bei Messung bei 20°C und einer Schergeschwindigkeit von 1.10³ s⁻¹ eine Viskosität von 300 mPa.s oder weniger aufweist, wobei das mittels Schutz-Kolloid stabilisierte Polymer eine mittels Schutz-Kolloid stabilisierte Poly(vinylester)-Homo- oder Copolymer-Emulsion ist, die durch Polymerisation eines Vinylesters und wahlweise eines oder mehrerer weiterer Monomer(e) in Gegenwart von 0,5-8 Gew.% eines Poly(vinylalkohols) erhältlich ist, wobei der Poly(vinylalkohol) einen Hydrolysegrad zwischen 70-95 Mol% aufweist und eine Brookfield-Viskosität, bei Lösen von 4 Gew.% in einer wässrigen Lösung bei 20°C, von 2 bis 50 mPa.s.

2. Verfahren nach Anspruch 1, wobei das mittels Schutz-Kolloid stabilisierte Polymer ein Polymer oder eine Mischung aus Polymeren ist, das/die mittels Emulsionspolymerisation in Gegenwart eines Schutz-Kolloids und einer Monomer-Mischung, welche (1) Vinylacetat und Dibutylmaleat, (2) Vinylacetat und Ethylen, (3) Vinylacetat und N-Butylacrylat oder (4) Vinylacetat und ein Vinylversatat umfasst, erhältlich ist/sind, wobei die Monomer-Mischung die beiden verschiedenen Monomere in einer Gesamtmenge von mindestens 80 Gew.% bezogen auf das Gewicht der Monomer-Mischung umfasst.

3. Verfahren nach Anspruch 1 oder 2, bei dem man ferner die die Aufsprühen beschichtete Zusammensetzung trocknet oder eine weitere Schicht der wasserbasierten Käsebeschichtungszusammensetzung auf den Käse sprüht.

4. Verfahren nach einem der vorhergehenden Ansprüche, wobei der Käse ein halbharter Käse oder ein Hartkäse ist.

5. Wasserbasierte Käsebeschichtungszusammensetzung, die ein mittels Schutz-Kolloid stabilisiertes Polymer in einer Menge von 38-48 Gew.% bezogen auf das Gewicht der Zusammensetzung umfasst, wobei das mittels Schutz-Kolloid stabilisierte Polymer ein Polymer oder eine Mischung aus Polymeren ist, das/die mittels Emulsionspolymerisation in Gegenwart eines Schutz-Kolloids aus (1) einem Vinylester und (2) wahlweise einem oder mehreren weiteren Monomer(en) erhältlich ist/sind, und wobei die Beschichtungszusammensetzung bei Messung bei 20°C und einer Schergeschwindigkeit von 1.10³ s⁻¹ eine Viskosität von 300 mPa.s oder weniger aufweist, wobei das mittels Schutz-Kolloid stabilisierte Polymer eine mittels Schutz-Kolloid stabilisierte Poly(vinylester)-Homo- oder Copolymer-Emulsion ist, die durch Polymerisation eines Vinylesters und wahlweise eines oder mehrerer weiterer Monomer(e) in Gegenwart von 0,5-8 Gew.% eines Poly(vinylalkohols) erhältlich ist, wobei der Poly(vinylalkohol) einen Hydrolysegrad zwischen 70-95 Mol% aufweist und eine Brookfield-Viskosität, bei Lösen von 4 Gew.% in einer wässrigen Lösung bei 20°C, von 2 bis 50 mPa.s.

6. Wasserbasierte Käsebeschichtungszusammensetzung nach Anspruch 5, wobei mittels Schutz-Kolloid stabilisierte Polymer ein Polymer oder eine Polymer-Mischung ist, das/die mittels Emulsionspolymerisation in Gegenwart eines Schutz-Kolloids und einer Monomer-Mischung, welche (1) Vinylacetat und Dibutylmaleat, (2) Vinylacetat und Ethylen, (3) Vinylacetat und N-Butylacrylat oder (4) Vinylacetat und ein Vinylversatat umfasst, erhältlich ist/sind, wobei die Monomer-Mischung die beiden verschiedenen Monomere in einer Gesamtmenge von mindestens 80 Gew.% bezogen auf das Gewichts der Monomer-Mischung umfasst.

7. Wasserbasierte Käsebeschichtungszusammensetzung nach Anspruch 5 oder 6, die das Schutzkolloid-stabilisierte Polymer in einer Menge von 40-48 Gew.% bezogen auf das Gewicht der Zusammensetzung umfasst.

8. Wasserbasierte Käsebeschichtungszusammensetzung nach einem der Ansprüche 5-7, wobei die wasserbasierte Käsebeschichtungszusammensetzung bei Messung bei 20°C und einer Schergeschwindigkeit von 1.10³ s⁻¹ eine Viskosität von 250 mPa.s oder weniger aufweist.

9. Wasserbasierte Käsebeschichtungszusammensetzung nach einem der Ansprüche 5-8, die ferner ein Additiv umfasst, das ausgewählt ist aus der Gruppe bestehend aus einem Farbstoff und einem Fungizid oder einer Mischung davon.

10. Wasserbasierte Käsebeschichtungszusammensetzung nach einem der Ansprüche 5-9, wobei das Schutzkolloid-stabilisierte Polymer ein Polymer oder eine Mischung aus Polymeren ist, das/die mittels Emulsionspolymerisation in Gegenwart eines Schutzkolloids aus (a) Vinylacetat und Ethylen oder (b) Vinylacetat und Dibutylmaleat erhältlich ist.

11. Wasserbasierte Käsebeschichtungszusammensetzung nach einem der Ansprüche 5-10, die ferner ein pseudoplastisches Verdickungsmittel in einer Menge von 0,1-1 Gew.% bezogen auf die Gesamtmenge der wasserbasierten Käsebeschichtungszusammensetzung umfasst.

12. Wasserbasierte Käsebeschichtungszusammensetzung nach Anspruch 11, wobei das pseudoplastische Verdickungsmittel Xanthan umfasst oder vorzugsweise Xanthan ist.

13. Wasserbasierte Käsebeschichtungszusammensetzung nach einem der Ansprüche 9-12, wobei das Fungizid eine oder mehrere Verbindung(en) ausgewählt aus der Gruppe bestehend aus Natamycin, Essigsäure und Propansäure ist/sind.

14. Wasserbasierte Käsebeschichtungszusammensetzung nach Anspruch 12, wobei das Fungizid Natamycin ist.

15. Wasserbasierte Käsebeschichtungszusammensetzung nach einem der Ansprüche 9-14, wobei der Farbstoff ein oder mehrere Stoffe ausgewählt aus der Gruppe bestehend aus Carotin, Annatto, Carbonschwarz, Titandioxid, Tartrazin Chinolingelb, Gelborange S, Cochenillerot, Indigotin, Brilliantschwarz und Litholrubin ist/sind.

16. Verfahren nach einem der Ansprüche 1-4, wobei die wasserbasierte Beschichtungszusammensetzung in einem der Ansprüche 5-15 definiert ist.

## Revendications

1. Procédé d'enrobage de fromage, comprenant la pulvérisation d'une composition aqueuse d'enrobage pour fromage sur un fromage, dans lequel la composition aqueuse d'enrobage pour fromage comprend un polymère stabilisé par colloïde protecteur en une quantité de 38 % à 48 % en poids par rapport au poids de la composition, dans lequel ledit polymère stabilisé par colloïde protecteur est un polymère ou un mélange de polymères pouvant être obtenu par la polymérisation en émulsion, en présence d'un colloïde protecteur, (1) d'un ester vinylique et (2) facultativement d'un ou de plusieurs autre(s) monomère(s) ; et dans lequel ladite composition d'enrobage présente une viscosité, quand elle est mesurée à 20 °C et à une vitesse de cisaillement de 1.10³ s⁻¹, de 300 mPa.s ou moins, dans lequel le polymère stabilisé par colloïde protecteur est une émulsion d'homo- ou de co-polymère de poly(ester de vinyle) stabilisé par colloïde protecteur pouvant être obtenue par la polymérisation d'un ester de vinyle et facultativement d'un ou de plusieurs autre (s) monomère (s) en présence de 0,5 % à 8 % en poids d'un poly(alcool vinylique), dans lequel le poly(alcool vinylique) présente un degré d'hydrolyse situé entre 70 % et 95 % en mole et une viscosité Brookfield, quand il est dissous à 4 % en poids dans une solution aqueuse à 20 °C, de 2 à 50 mPa.s.

2. Procédé selon la revendication 1, dans lequel le polymère stabilisé par colloïde protecteur est un polymère ou un mélange de polymères pouvant être obtenu par la polymérisation en émulsion, en présence d'un colloïde protecteur, d'un mélange de monomères comprenant (1) de l'acétate de vinyle et du maléate de dibutyle, (2) de l'acétate de vinyle et de l'éthylène, (3) de l'acétate de vinyle et de l'acrylate de n-butyle, ou (4) de l'acétate de vinyle et un versatate de vinyle, dans lequel le mélange de monomères comprend lesdits deux monomères différents en une quantité totale d'au moins 80 % en poids par rapport au poids du mélange de monomères.

3. Procédé selon la revendication 1 ou 2, comprenant en outre le séchage de la composition déposée par pulvérisation et la pulvérisation d'une autre couche de la composition aqueuse d'enrobage pour fromage sur le fromage.

4. Procédé selon l'une quelconque des revendications précédentes, dans lequel le fromage est un fromage à pâte demi-dure ou dure.

5. Composition aqueuse d'enrobage pour fromage, comprenant un polymère stabilisé par colloïde protecteur en une quantité de 38 % à 48 % en poids par rapport au poids de la composition, dans lequel ledit polymère stabilisé par colloïde protecteur est un polymère ou un mélange de polymères pouvant être obtenu par la polymérisation en émulsion, en présence d'un colloïde protecteur, (1) d'un ester vinylique et (2) facultativement d'un ou de plusieurs autre(s) monomère(s) ; et dans laquelle ladite composition d'enrobage présente une viscosité, quand elle est mesurée à 20 °C et à une vitesse de cisaillement de 1.10³ s⁻¹, de 300 mPa.s ou moins, dans laquelle le polymère stabilisé par colloïde protecteur est une émulsion d'homo- ou de co-polymère de poly(ester de vinyle) stabilisé par colloïde protecteur pouvant être obtenue par la polymérisation d'un ester de vinyle et facultativement d'un ou de plusieurs autre(s) monomère (s) en présence de 0,5 % à 8 % en poids d'un poly(alcool vinylique), dans laquelle le poly(alcool vinylique) présente un degré d'hydrolyse situé entre 70 % et 95 % en mole et une viscosité Brookfield, quand il est dissous à 4 % en poids dans une solution aqueuse à 20 °C, de 2 à 50 mPa.s.

6. Composition aqueuse d'enrobage pour fromage selon la revendication 5, dans laquelle le polymère stabilisé par colloïde protecteur est un polymère ou un mélange de polymères pouvant être obtenu par la polymérisation en émulsion, en présence d'un colloïde protecteur, d'un mélange de monomères comprenant (1) de l'acétate de vinyle et du maléate de dibutyle, (2) de l'acétate de vinyle et de l'éthylène, (3) de l'acétate de vinyle et de l'acrylate de n-butyle, ou (4) de l'acétate de vinyle et un versatate de vinyle, dans laquelle le mélange de monomères comprend lesdits deux monomères différents en une quantité totale d'au moins 80 % en poids par rapport au poids du mélange de monomères.

7. Composition aqueuse d'enrobage pour fromage selon la revendication 5 ou 6, comprenant le polymère stabilisé par colloïde protecteur en une quantité de 40 % à 48 % en poids par rapport au poids de la composition.

8. Composition aqueuse d'enrobage pour fromage selon l'une quelconque des revendications 5 à 7, dans laquelle la composition aqueuse d'enrobage pour fromage présente une viscosité, quand elle est mesurée à 20 °C et à une vitesse de cisaillement de 1.10³ s⁻¹, de 250 mPa.s ou moins.

9. Composition aqueuse d'enrobage pour fromage selon l'une quelconque des revendications 5 à 8, comprenant en outre un additif choisi dans le groupe constitué d'un colorant et d'un fongicide, ou un de leurs mélanges.

10. Composition aqueuse d'enrobage pour fromage selon l'une quelconque des revendications 5 à 9, dans laquelle le polymère stabilisé par colloïde protecteur est un polymère ou un mélange de polymères pouvant être obtenu par la polymérisation en émulsion, en présence d'un colloïde protecteur, (a) d'acétate de vinyle et d'éthylène, ou (b) d'acétate de vinyle et de maléate de dibutyle.

11. Composition aqueuse d'enrobage pour fromage selon l'une quelconque des revendications 5 à 10, comprenant en outre un agent épaississant pseudoplastique en une quantité de 0,1 % à 1 % en poids par rapport au poids total de la composition aqueuse d'enrobage pour fromage.

12. Composition aqueuse d'enrobage pour fromage selon la revendication 11, dans laquelle l'agent épaississant pseudoplastique comprend ou est de préférence de la gomme de xanthane.

13. Composition aqueuse d'enrobage pour fromage selon l'une quelconque des revendications 9 à 12, dans laquelle le fongicide est un ou plusieurs composés choisis dans le groupe constitué de la natamycine, de l'acide acétique et de l'acide propionique.

14. Composition aqueuse d'enrobage pour fromage selon la revendication 12, dans laquelle le fongicide est la natamycine.

15. Composition aqueuse d'enrobage pour fromage selon l'une quelconque des revendications 9 à 14, dans laquelle le colorant est un ou plusieurs composés choisis dans le groupe constitué d'un carotène, de l'annatto, du noir de carbone, du dioxyde de titane, du jaune de tartrazine chinoline, du jaune orangé S, du rouge cochenille, de l'indigotine, du noir brillant et de la litholrubine.

16. Procédé selon l'une quelconque des revendications 1 à 4, dans lequel la composition aqueuse d'enrobage est définie dans l'une quelconque des revendications 5 à 15.
